# EUROPEAN PATENT APPLICATION

(11) **EP 1 600 970 A1**
(43) Date of publication of application: **30.11.2005**
(21) Application number: 05252642.3
(22) Date of filing: 27.04.2005
(51) Int. Cl.: G11B 27/034, H04N 5/00

(54) **Data reception storage device**

(30) Priority: 21.05.2004 GB 0411346
(71) Applicant: Pace Micro Technology PLC, Saltaire, Shipley, BD18 3LF (GB)
(72) Inventor: Entwistle, Paul, Bramley, Hampshire RG26 5AG (GB)
(74) Representative: Wood, Graham

(57) **Abstract**

The invention relates to the provision of broadcast data processing and display apparatus comprising at least two parts. The first part acts as a base and onto which base, said second part can be selectively positioned for use. The second part can be selectively usable independently and/or by connection to a further item of apparatus. The second part includes a memory means in which data from which at least part of a radio or television programme can be generated can be selectively stored for subsequent retrieval and display via screen and or speakers on the second part and/or first part and/or said further item of apparatus. Typically the first, base part includes at least one tuner for selective tuning to a frequency in response to a user selection, to receive the broadcast data for television and/or radio programmes which can then be stored in the base or the memory means in the second part.

## Description

The invention to which this application is directed is towards the provision of a device which is capable of the reception of data which is broadcast from a remote location, the decoding of the data and subsequent processing of the data for display via video and/or audio means and/or storage for subsequent retrieval and display and to allow the data to be provided in a manner which ensures greater adaptability and hence utilisation in comparison to current apparatus and devices.

The provision of devices for the reception of transmitted data which is transmitted via satellite, cable and/or terrestrial systems, is well known. Indeed, such apparatus is typically known as a broadcast data receiver or "set top box". Apparatus of this type is typically provided to be located in connection with and in proximity to a television set thereby allowing the display screen and speakers of the television set to be used for the generation and display of the audio and/or video data which is received and processed by the broadcast data receiver. Other communication devices which allow reception and processing of data, albeit in more limited format, are for example mobile telephones, various types of gaming apparatus such as "Game Boy Advance", portable DVD players and the like. Typically, the available apparatus can be divided into two types, that which is portable and that which is for a fixed location.

The problem with the apparatus which is portable is that generally the same only has a relatively short lifespan in between the power source, typically a battery, being required to be replaced or recharged. To recharge, the device is required to be placed on a cradle in which a charging means is provided and connected to a power source, or connected directly to a power source via a cable connection. These portable products also have an ability to connect to a computer to allow data content to be downloaded via the computer system or alternatively, have connections to allow a sample of analogue audio or video to be obtained. Some of these devices such as a mobile telephone, also include a tuner in the form of a radio transceiver which allows the reception of data representing a telephone call and/or other services. Such portable devices also tend to have a limited memory therein. Generally therefore such portable devices tend to have a relatively limited range of uses and as a result, their functionality is somewhat limited.

With devices such as broadcast data receivers, which are provided at a fixed location, there has been the development of the provision of a memory in the form of a hard disc which is provided within the apparatus. The memory acts as a means whereby the user can select to store received data representative of a selected television or radio programme and from which memory, the programmes stored therein can be retrieved for viewing. Thus, the user is no longer required to have a separate video recorder as the data for the programmes which are to be stored can be stored in the hard disc which is provided as an integral part of the broadcast data receiver. This development has proved to be particularly popular and broadcast data receivers of this type have entered into the market place in significant numbers.

The aim of the present invention is to provide a new form of device which incorporates features of both portable and fixed types of apparatus in a unique and advantageous manner so as to provide increased utility to the user of this form of apparatus.

In a first aspect of the invention, there is provided broadcast data processing and display apparatus comprising at least two parts, a first part which acts as a base and onto which base, said second part can be selectively positioned for use, said second part selectively usable independently and/or by connection to a further item of apparatus and wherein said second part includes a memory means in which data from which at least part of a radio or television programme can be generated, can be selectively stored for subsequent retrieval and said first, base part includes at least one tuner for selective tuning to a frequency in response to a user selection, to receive broadcast data for television and/or radio programmes.

Thus there is provided apparatus comprising a first part which acts as a base and onto which base, said second part can be selectively positioned for use, said second part selectively usable independently and/or by connection to further items of apparatus. The second part can include memory means in which data indicative of at least one radio or television programme can be selectively stored for subsequent retrieval. The first part includes at least one tuner for the selective tuning to predetermined frequencies in response to user selection to receive transmitted data which is representative of at least one television or radio programme and the data can then be transferred from the base part to the memory means in the second part.

Typically, the second part is provided to be portable and therefore removable and usable at locations which are remote from the first, base part. Said second part can be provided to be connectable via suitable connection means to any of a television, radio and/or speakers and/or display screens or the like to allow the display of audio and/or video from the storage means in said second part.

In one embodiment, said second part is connectable to said apparatus directly, i.e. without said first part, to allow the data to be displayed or, alternatively, is connectable to said apparatus via said first, base part when physically located on or adjacent to said first base part. In a yet further embodiment, said second part can be connected to the further apparatus via said first base part via a wireless connection between said first and second parts which allows the transfer of data therebetween.

In one embodiment, in addition to including a tuner within the first base part, the first base part also includes a means for allowing the charging of a power source provided in the second part when said second part is physically located in or adjacent to the first base part over a predetermined period of time.

Typically, when the first and second parts are in connection, the tuner can be selectively operated to tune to a particular service or programme whereupon the tuner is directed towards this appropriate frequency to receive the data for a selected programme, which data is transmitted from the remote location via any of the conventional broadcast means. When the data is received, the user can then select to store the data in the memory means provided in the second part and, as the same is provided in connection with the first part, the data can be transferred between the two parts into the storage means whereupon the data is processed and stored in the storage means in a conventional manner.

If the first and second parts are retained together then the data which is held in the storage means can be retrieved and viewed via a display screen and/or speakers connected to said apparatus. However, if the second part is removed from the first part and thereafter used as a separate device, the second part can be connected to other display screens and/or speakers as required and the data retrieved from the storage means as and when required for display via said other display means and/or speakers, or alternatively the programme can be displayed via a screen and/or speakers provided as an integral part of the second part.

In one embodiment, even with the second part removed, the first base part can still be used as a means for receiving data representative of programmes and by connection of the first, base part with a display screen and/or speakers, the received data can be selected to be viewed or listened to. Thus, in accordance with this embodiment, the user is provided with the continuous ability to receive data via the first base part and the tuner therein and therefore provide a continuous data reception means and, by selectively positioning the second part in relation to the first part, can store data for subsequent usage at the location of the first base part or elsewhere. In one embodiment the first base part may also include a storage means in which received data can be stored.

The present invention therefore provides a means whereby the second part acts as a portable, personal video recorder with storage means therein such as a hard disc and whereby data held in the storage means can be selectively retrieved and displayed. In one embodiment, the said second part includes a display screen and/or speakers thereon such that the data held in the storage means can be directly displayed on the second part itself and therefore there is no need for the second part to be connected to further display screens and/or speakers.

Furthermore, as with any portable device, there is a need for the same to be charged, and the current invention utilises the time in which the second part is required to be charged via the first part to also allow the reception of data which is representative of selected programmes to be received and stored in the memory of the second part while the same is in situ on the first, base part. As the second part does not include a tuner, the said second part can be smaller in size, and may be of lower cost and lower power consumption.

A specific embodiment of the invention is now described with reference to the accompanying drawings, wherein:-
Figure 1 illustrates the first and second parts of the invention in a first arrangement; and
Figure 2 illustrates first and second parts of an embodiment of the invention in a second arrangement.

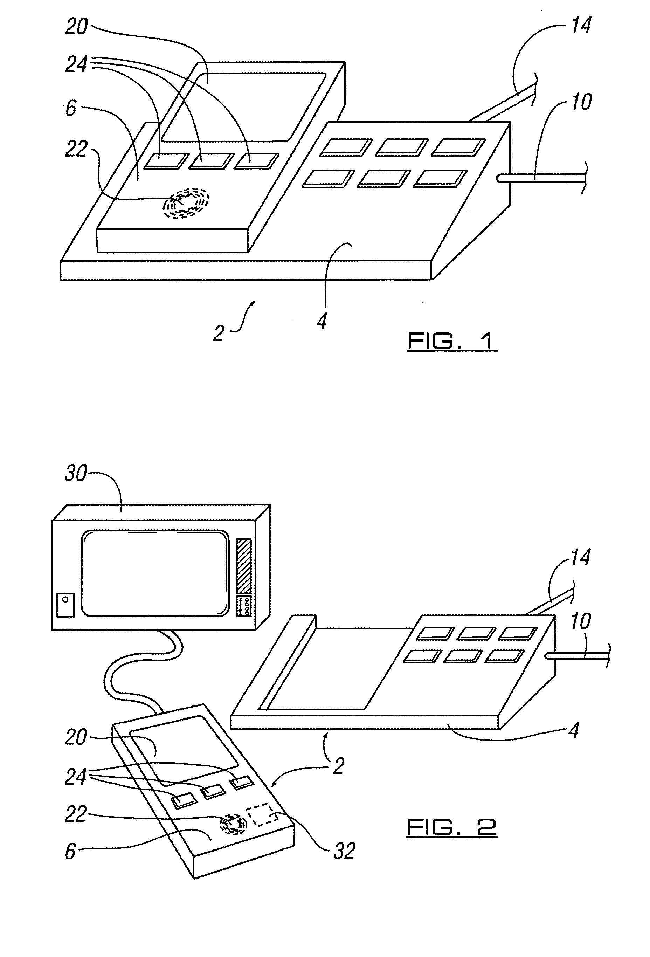

Referring firstly to Figure 1, there is illustrated apparatus 2 in accordance with one embodiment of the invention in a first arrangement. In this arrangement, the apparatus comprises a first, base part 4 and a second part 6, and is provided in a data download and/or charging arrangement. In this arrangement, the first and second parts are provided together and in electrical and data connection, using any suitable electrical and data connection means. The first part 4 includes therein a power charging device connected via cable 10 to a power source such as mains electricity. Also provided within the first part is a tuner, not shown, which is connected, in this case via co-axial cable 14 to an external satellite antenna to allow data which is broadcast via the satellite system to be received. The first part also includes processing means to allow the data which is received via the operation of the tuner and the satellite antenna to be decoded and processed into a suitable format for display and/or storage for subsequent retrieval and display.

In one embodiment, the first part may also be connected, although not shown, to a display screen and/or speakers in the form of, for example, a television set such that data which is received via the tuner can be processed and passed to the television set for display in response to user selections.

The second part 6 of the apparatus 2 is detachable from the first part and includes therein, in this embodiment, a display screen 20 and at least one speaker 22. Also provided are control means 24 which allow user control of the operation of the said second part. Also provided within the second part is a data storage means such as, for example, a hard disc. The data storage means is provided to allow the selective storage of data which is received via the tuner of the first part of the apparatus. The data which is selected by the user to be stored in the storage means is thereafter transportable with the second part such that in the arrangement shown in Figure 2, where the second part is separate from the first part, the data held in the storage means can be selectively retrieved for display on the display screen and/or speaker of the second part as all the required data is held in the storage means in the second part.

Thus, in accordance with the invention, there is provided apparatus which allows for the selective reception of data which is representative of television and/or radio programmes, the control of tuning means to allow the required frequency on which the data is transmitted to the first part in response to user selection, storage means which allow the selected data to be stored in the same for subsequent retrieval and the storage means being provided as part of a portable device in the form of the second part which can be removed and the data selectively retrieved and viewed at a location to suit the user and which location can be separate from the location of the first, base part.

Typically, in operation, it is envisaged that when the second part, which has a battery power source therein, is required to be recharged, the same is positioned on the first, base part and, when the recharging is occurring, the tuner can be controlled in response to viewer selections to tune to receive data which is representative of the selected programmes. That received data can then be transferred into the storage means of the second part while it is in the connection with the said first part. Once charged, the second part can be removed, if required and act as a portable, self contained unit with the selected data stored in the said storage means therein for subsequent retrieval and viewing.

In Figure 2 it is shown how the second part 6 can also be connected, separately from the first part 4, with a further item of apparatus in the form of a television set 30 and this allows data from the memory means 32 in the second part to be transferred to the television set and the audio and video can be displayed via the television set 30.

Thus there is provided the ability for the data which is received to be displayed via the second part 6 or other apparatus 30 when connected to the first part 4, or for received data to be selected and transferred from the first part 4 to the second part 6 and stored in the memory means 32 and for that data to be displayed on the second part 6 or via further apparatus 30 connected thereto. Typically the control of the display routing and storage of data is achieved via the control means 24 and control means 34 on the second and first parts respectively and the connections to allow the transfer of data can be any suitable and compatible digital data transfer connectors. The data can be received via satellite, cable or terrestrial broadcast systems.

If required, the said second part and/or first part as required can contain extra processing capabilities for interactive services and a return channel to allow billing and security functions.

## Claims

1. Broadcast data processing and display apparatus comprising at least two parts, a first part which acts as a base and onto which base, said second part can be selectively positioned for use, said second part selectively usable independently and/or by connection to a further item of apparatus and wherein said second part includes a memory means in which data from which at least part of a radio or television programme can be generated, can be selectively stored for subsequent retrieval and said first, base part includes at least one tuner for selective tuning to a frequency in response to a user selection, to receive broadcast data for television and/or radio programmes.

2. Apparatus according to claim 1 wherein the second part is provided to be portable and therefore removable and usable at locations which are remote from the first, base part.

3. Apparatus according to claim 1 wherein the second part is provided to be connectable via a suitable connection means to any of a television, video and/or speakers and/or display screens to allow the display of audio and/or video from the storage means in said second part.

4. Apparatus according to claim 3 wherein said second part is connectable to said further apparatus directly to allow the data to be displayed.

5. Apparatus according to claim 3 wherein the second part is connectable to said further apparatus via said first, base part, when physically located on or adjacent to said first base part.

6. Apparatus according to claim 3 wherein said second part is connectable to said further apparatus via a wireless connection which allows the transfer of data therebetween.

7. Apparatus according to claim 1 wherein the first base part includes a means for allowing the charging of a power source provided in the second part when said second part is physically located in or adjacent to the first base part.

8. Apparatus according to claim 1 wherein when the first and second parts are in connection, the tunes can be selectively operated in response to a user selection of a particular programme whereupon the tuner is directed towards the appropriate frequency to receive the data for the selected programme which data is transmitted from a remote location via any of the conventional broadcast means.

9. Apparatus according to claim 8 wherein when the data is received, the user can select to store the data in the memory means provided in the second part and transfer of the data occurs from the first to the second part.

10. Apparatus according to claim 8 wherein the data, when received in the storage means is processed and stored in a conventional manner.

11. Apparatus according to claim 1 wherein if the first and second parts are in connection, the data which is held in the storage means can be retrieved and viewed via a display screen and/or speakers connected to said first part.

12. Apparatus according to claim 1 wherein the second part includes an integral screen and/or speakers to allow a selected radio and or television programme to be generated from the second part.

13. Apparatus according to claim 1 wherein the first base part can be used as a means for receiving data representative of programmes and can be selectively connected to a display screen and/or speakers to allow received data to be viewed or listened to.

14. Apparatus according to any of the preceding claims wherein the first, base part includes a storage means in which received data can be stored.
